# FASCICULE DE BREVET EUROPEEN

(11) **EP 1 999 482 B1**
(45) Date de publication et mention de la délivrance du brevet: **24.02.2010**
(21) Numéro de dépôt: 07731148.8
(22) Date de dépôt: 16.03.2007
(51) Int. Cl.: G01S 5/14

(54) **PROCEDE DE GESTION DE FILTRES ADDITIONNELS DANS UN SYSTEME DE NAVIGATION PAR SATELLITES**
VERFAHREN ZUR VERWALTUNG ZUSÄTZLICHER FILTER IN EINEM SATELLITENNAVIGATIONSSYSTEM
METHOD OF MANAGING ADDITIONAL FILTERS IN A SATELLITE NAVIGATION SYSTEM

(30) Priorité: 27.03.2006 FR 0602631
(43) Date de publication de la demande: 10.12.2008
(73) Titulaire: SAGEM DEFENSE SECURITE, 75015 Paris (FR)
(72) Inventeur: VACHER, Charlie, F-75018 Paris (FR); GOUDON, Jean-Claude, F-26120 Montelier (FR)
(74) Mandataire: Lavialle, Bruno François Stéphane
(86) Numéro de dépôt international: PCT/FR2007/000456
(87) Numéro de publication internationale: WO 2007/110496

(56) Documents cités:
- FR-A1- 2 866 423
- US-A- 5 760 737
- US-A1- 2003 117 317

## Description

La présente invention concerne un procédé de gestion de filtres additionnels dans un système de navigation et de localisation par satellites, tel qu'un système GPS ("Global Positioning System"), équipant un véhicule et notamment un aéronef.

### ARRIERE PLAN DE L'INVENTION

Un tel système de navigation permet de calculer, lors d'un trajet de l'aéronef, des positions successives de l'aéronef en utilisant un filtre principal de fusion de données provenant d'une constellation visible de satellites présents au-dessus d'un horizon de l'aéronef et éventuellement de données provenant d'une centrale inertielle ou similaire embarquée sur l'aéronef. On rappelle que l'horizon est la ligne qui sépare ce qui, vis-à-vis de l'aéronef, est masqué par la courbure de la Terre de ce qui ne l'est pas. Avec le système GPS, un certain nombre maximum de satellites sont présents au-dessus de l'horizon d'un aéronef (c'est-à-dire le nombre maximal de satellites non masqués par la courbure de la Terre par rapport à l'aéronef), de l'ordre de dix, mais il n'est pas rare que le relief ou une partie de l'aéronef masquent un ou plusieurs de ces satellites. Ce système de navigation fonctionne néanmoins à partir du moment où il dispose des données d'au moins quatre des satellites qui forment la constellation visible des satellites. Ce système de navigation s'avère relativement précis lorsque les satellites fonctionnent correctement mais les performances de celui-ci se dégradent rapidement dès que l'un des satellites présente une défaillance affectant la validité des données transmises.

Pour remédier à ce problème, le système de navigation calcule également des positions corrigées à partir de filtres additionnels excluant chacun les données provenant d'un des satellites. Lorsque la défaillance d'un des satellites est détectée, le filtre additionnel excluant ce satellite devient le filtre principal et les autres filtres additionnels sont initialisés à partir du nouveau filtre principal.

Un tel système est décrit dans le document US-A-5 760 737.

La création des filtres additionnels est déclenchée par la détection d'un nouveau satellite. Ainsi, dès que les données provenant d'un satellite parviennent au système de navigation, un filtre additionnel excluant ce satellite est créé et ce satellite est incorporé aux filtres additionnels existants. Lorsque le système de navigation ne détecte plus de données en provenance de ce satellite, le filtre additionnel correspondant est effacé. Or, lorsque les satellites sont masqués par le relief ou une partie de l'aéronef, les données transmises par les satellites masqués ne parviennent plus au système de navigation, ce qui provoque l'effacement des filtres correspondants, filtres qui seront à nouveau créés lorsque les satellites ne seront plus masqués et que leurs données parviendront au système de navigation. La gestion des filtres additionnels est particulièrement lourde à gérer et constitue une charge de calcul relativement importante pour le système de navigation.

### OBJET DE L'INVENTION

Il serait donc intéressant de disposer d'un moyen permettant d'alléger la gestion des filtres additionnels.

### RESUME DE L'INVENTION

A cet effet, on prévoit, selon l'invention, un procédé de gestion de filtres additionnels dans un système de navigation qui équipe un véhicule et qui fournit, lors d'un trajet du véhicule, au moins une position du véhicule en utilisant un filtre principal de fusion de données provenant d'une constellation visible de satellites présents au-dessus d'un horizon du véhicule, les filtres additionnels excluant chacun les données provenant d'un des satellites pour obtenir une position corrigée en cas de défaillance du satellite exclu. Le procédé comprend les étapes de :
- déterminer, à partir d'une position du véhicule, une constellation théorique de satellites présents au-dessus de l'horizon,
- pour tout satellite présent dans la constellation théorique, créer et maintenir un filtre additionnel excluant ce satellite.

Ainsi, les filtres additionnels sont maintenus tant que les satellites exclus par ceux-ci sont présents dans la constellation théorique, que ces satellites soient visibles ou masqués. Comme la constellation théorique subit relativement peu de modifications au cours du trajet du véhicule, il y a relativement peu de créations et d'effacements de filtres additionnels.

De préférence, le procédé comprend l'étape, pour tout satellite présent dans la constellation théorique, d'inclure ce satellite dans les filtres additionnels existants dès l'apparition de ce satellite dans la constellation théorique.

Ainsi, un satellite apparaissant dans la constellation théorique est incorporé dans les filtres additionnels existants sans attendre la détection de ce satellite par le filtre principal. Cette incorporation peut donc être réalisée en répartissant la charge de calcul.

Avantageusement, la position utilisée pour la détermination de la constellation théorique est fournie par le filtre principal.

La constellation théorique déterminée correspond alors précisément à la position du véhicule au cours du trajet de celui-ci et ce, même si la destination ou les points de passage du véhicule ont été modifiés au cours du trajet.

De préférence encore, lorsqu'un satellite disparaît de la constellation théorique à un instant du trajet, le procédé comprend l'étape d'attendre une durée prédéterminée avant de supprimer le filtre additionnel excluant ce satellite.

Ceci est avantageux en cas de disparition temporaire d'un satellite de la constellation théorique.

Avantageusement, lorsqu'un satellite disparu réapparaît dans la constellation théorique, le procédé comprend l'étape d'attendre une convergence des filtres avant de créer un filtre additionnel excluant ce satellite et de réincorporer ce satellite dans les filtres additionnels existants.

Ceci permet d'éviter qu'un satellite présentant une défaillance non détectée au moment de sa disparition de la constellation soit réintégré dans les filtres additionnels et ne viennent fausser les positions corrigées. D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux dessins annexés, parmi lesquels :

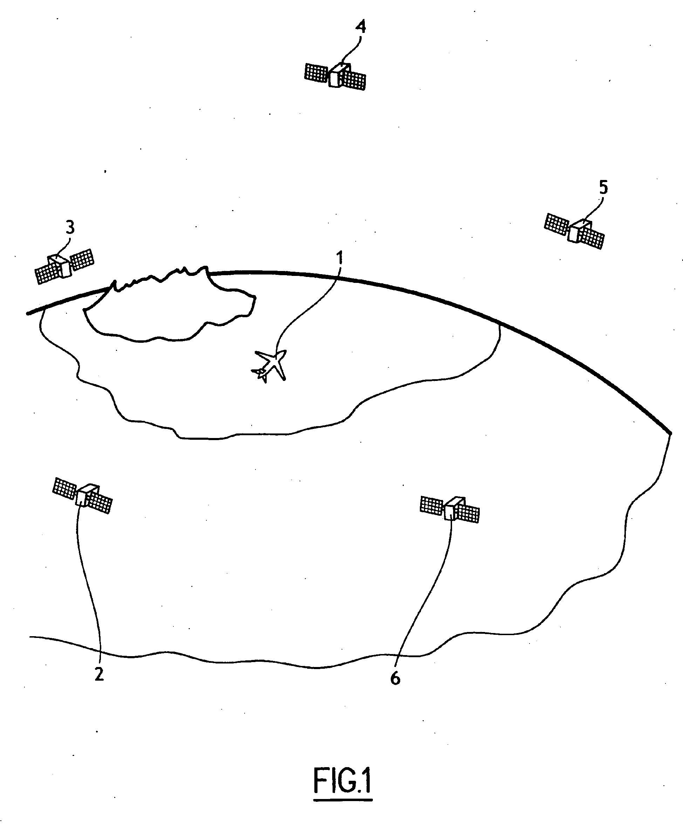

- la figure 1 est une vue schématique en perspective d'une constellation de satellites présents au-dessus de l'horizon d'un aéronef,

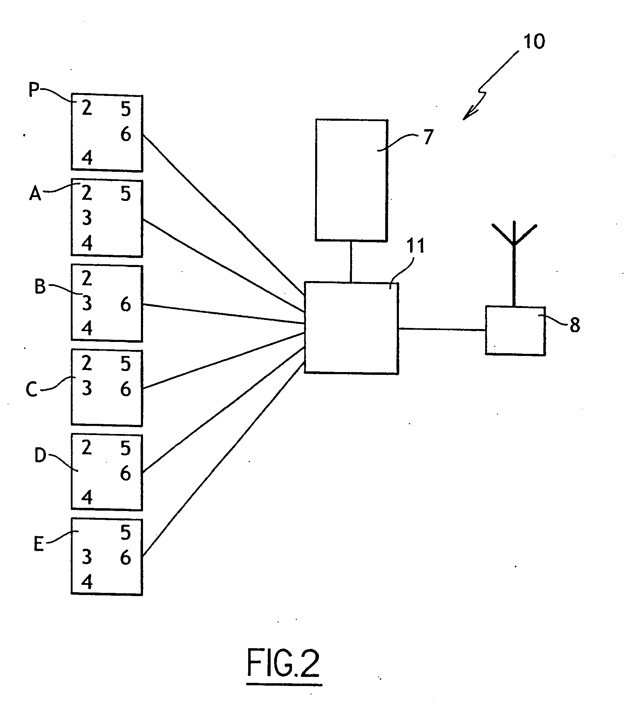

- la figure 2 est une vue schématique d'un système de navigation embarqué sur l'aéronef.

### DESCRIPTION DETAILLEE DE L'INVENTION

En référence aux figures, le procédé de l'invention est ici décrit en relation avec un aéronef 1 embarquant un système de navigation 10 utilisant des données issues de satellites 2, 3, 4, 5 et 6 en orbite autour de la Terre 100 et des données issues d'une centrale inertielle 7 embarquée sur l'aéronef 1.

La centrale inertielle 7 est connue en elle-même et délivre, à partir de capteurs fixés à l'aéronef 1, des données relatives notamment à l'assiette de l'aéronef 1, sa vitesse.

Les satellites 2, 3, 4, 5, 6 font partie d'un ensemble de satellites qui sont positionnés en orbite autour de la terre et qui appartiennent à un système de localisation par satellites de type GPS. Chaque satellite 2, 3, 4, 5, 6 émet en permanence un signal comportant sa localisation et l'heure précise d'émission du signal. Il va de soi que l'invention est également utilisable avec d'autres systèmes de localisation par satellites comme le système GALILEO lorsque celui-ci sera fonctionnel.

Le système de navigation 10 comprend une unité de calcul 11 reliée à la centrale inertielle 7 et à un récepteur 8 des signaux issus des satellites. L'unité de calcul 11 incorpore de façon connue en elle-même des processeurs et des mémoires lui permettant de calculer une pseudo-distance séparant l'aéronef 1 de chaque satellite dont le signal est détecté par le récepteur 8 et de réaliser une fusion de ces pseudo-distances et des données provenant de la centrale inertielle 7 afin de déterminer entre autres une position de l'aéronef 1.

La fusion est réalisée de manière connue en elle-même en utilisant un filtre principal P qui prend en compte les données reçues par les satellites qui sont présents au-dessus de l'horizon de l'aéronef 1 et qui sont visibles en ce sens que les signaux qu'ils émettent sont détectés par le récepteur 8. Ces satellites sont en l'espèce les satellites 2, 4, 5, 6 qui forment la constellation visible de satellite, le satellite 3 étant ici masqué par une montagne.

L'unité de calcul 11 utilise également des filtres additionnels A, B, C, D, E qui exclut chacun un satellite pour obtenir une position corrigée lorsque le satellite exclu est identifié comme étant défaillant. Le filtre additionnel excluant ce satellite est alors substitué au filtre principal et les autres filtres additionnels sont réinitialisés à partir du nouveau filtre principal.

La gestion des filtres est assurée par l'unité de calcul 11 qui intègre un programme informatique de gestion des filtres, et va maintenant être expliquée.

Le filtre principal P intègre les satellites au fur et à mesure que le récepteur 8 reçoit des données en provenance de ceux-ci. Le filtre principal P intègre ici les satellites 2, 4, 5, 6. Si l'un de ces satellites est masqué par la suite, ce satellite est simplement considéré comme indisponible mais n'est pas effacé du filtre principal P.

Pour créer les filtres additionnels A, B, C, D, E, l'unité de calcul 11 détermine une constellation théorique de satellites présents au-dessus de l'horizon de l'aéronef à partir de la position de celui-ci fourni par le filtre principal. Cette détermination est relativement aisée en elle-même, la position des satellites étant connue.

A titre d'exemple, considérons qu'une première détermination de la constellation théorique révèle que les satellites 2, 4, 5, 6 sont au-dessus de l'horizon. L'unité de calcul crée quatre filtres additionnels A, B, C, D excluant chacun un des satellites 2, 4, 5, 6. Le filtre additionnel A incorpore les satellites 2, 4, 5 ; le filtre additionnel B incorpore les satellites 2, 4, 6 ; le filtre additionnel C incorpore les satellites 2, 5, 6 ; le filtre additionnel D incorpore les satellites 4, 5, 6. chaque filtre additionnel prend ainsi en compte les données provenant de tous les satellites sauf un.

Une détermination ultérieure de la constellation théorique révèle que le satellite 3, bien qu'encore masqué pour l'aéronef 1, apparaît au-dessus de l'horizon. L'unité de calcul 11 crée alors un filtre additionnel excluant le satellite 3 et incorporant donc les satellites 2, 4, 5, 6, et met à jour les filtres additionnels A, B, C, D en y incorporant le satellite 3. Alors, le filtre additionnel A incorpore les satellites 2, 3, 4, 5 ; le filtre additionnel B incorpore les satellites 2, 3, 4, 6 ; le filtre additionnel C incorpore les satellites 2, 3, 5, 6 ; le filtre additionnel D incorpore les satellites 3, 4, 5, 6. Tant que le satellite 3 est masqué, le filtre principal P n'incorpore que les satellites 2, 4, 5, 6.

Lorsqu'un satellite disparaît de la constellation théorique à un instant du trajet, le procédé comprend l'étape d'attendre une durée prédéterminée avant de supprimer le filtre additionnel excluant ce satellite. Ce satellite n'est pas effacé des filtres additionnels. A la fin de la durée d'attente, l'espace mémoire occupé par ce satellite pour les filtres additionnels sera libéré. On évite ainsi d'avoir à recréer un filtre additionnel si la disparition du satellite n'est que temporaire.

La durée d'attente terminée, lorsqu'un satellite disparu réapparaît dans la constellation théorique, le procédé comprend l'étape d'attendre une convergence des filtres avant de créer un filtre additionnel excluant ce satellite et de réincorporer ce satellite dans les filtres additionnels existants.

Bien entendu, l'invention n'est pas limité au mode de réalisation décrit mais englobe toute variante entrant dans le cadre de l'invention telle que définie par les revendications.

En particulier, l'inclusion d'un nouveau satellite dans les filtres additionnels existants peut être réalisée lors de la détection de celui-ci par le récepteur 8. Ceci suppose toutefois une charge de calcul plus élevée que dans le mode de mise en oeuvre décrit.

En outre, la constellation théorique peut être déterminée à l'avance pour des points de passage du véhicule au cours de son trajet si celui-ci est connu à l'avance et si l'on est sûr que ce trajet sera effectivement suivi par le véhicule.

Les temps d'attente mentionnés dans le mode de réalisation décrit sont facultatifs.

## Revendications

1. Procédé de gestion de filtres additionnels (A, B, C, D, E) dans un système de navigation et de localisation par satellites (10) qui équipe un véhicule (1) et qui fournit, lors d'un trajet du véhicule, au moins une position du véhicule en utilisant un filtre principal (P) de fusion de données provenant d'une constellation visible de satellites appartenant à un système de localisation par satellites (2, 4, 5, 6) présents au-dessus d'un horizon du véhicule, les filtres additionnels excluant chacun les données provenant d'un des satellites pour obtenir une position corrigée en cas de défaillance du satellite exclu, **caractérisé en ce que** le procédé comprend les étapes de :
- déterminer, à partir d'une position du véhicule, une constellation théorique de satellites appartenant au système de localisation par satellites (2, 3, 4, 5, 6) présents au-dessus de l'horizon,
- pour tout satellite présent dans la constellation théorique, créer et maintenir un filtre additionnel excluant ce satellite.

2. Procédé selon la revendication 1, comprenant l'étape, pour tout satellite présent dans la constellation théorique (2, 3, 4, 5, 6), d'inclure ce satellite dans les filtres additionnels (A, B, C, D, E) existants dès l'apparition de ce satellite dans la constellation théorique.

3. Procédé selon la revendication 1, dans lequel la position utilisée pour la détermination de la constellation théorique (2, 3, 4, 5, 6) est fournie par le filtre principal (P).

4. Procédé selon la revendication 1 dans lequel, lorsqu'un satellite disparaît de la constellation théorique (2, 3, 4, 5, 6) à un instant du trajet, le procédé comprend l'étape d'attendre une durée prédéterminée avant de supprimer le filtre additionnel (A, B, C, D, E) excluant ce satellite.

5. Procédé selon la revendication 4 dans lequel, lorsqu'un satellite disparu réapparaît dans la constellation théorique (2, 3, 4, 5, 6), le procédé comprend l'étape d'attendre une convergence des filtres (A, B, C, D, E) avant de créer un filtre additionnel (A, B, C, D, E) excluant ce satellite et de réincorporer ce satellite dans les filtres additionnels existants.

## Claims

1. A method of managing additional filters (A, B, C, D, E) in a satellites navigation and localization system (10) fitted to a vehicle (1), the system acting, during a journey of the vehicle, to deliver at least one position of the vehicle by using a main filter (P) for merging data coming from a constellation of visible satellites (2, 4, 5, 6) belonging to the system and present above a vehicle horizon, each additional filter excluding data coming from one of the satellites in order to obtain a corrected position in the event of failure of the excluded satellite, the method being **characterized in that** it comprises the steps of:
· from a position of the vehicle, determining a theoretical constellation of satellites (2, 3, 4, 5, 6) belonging to the system and present above the horizon; and
· for each satellite present in the theoretical constellation, creating and maintaining an additional filter excluding that satellite.

2. A method according to claim 1, including the step, for each satellite present in the theoretical constellation (2, 3, 4, 5, 6), of including said satellites in the existing additional filters (A, B, C, D, E) as soon as said satellite appears in the theoretical constellation.

3. A method according to claim 1, in which the position used for determining the theoretical constellation (2, 3, 4, 5, 6) is provided by the main filter (P).

4. A method according to claim 1, in which, when a satellite disappears from the theoretical constellation (2, 3, 4, 5, 6) at some instant on a journey, the method comprises the step of waiting for a predetermined duration before eliminating the additional filter (A, B, C, D, E) excluding said satellite.

5. A method according to claim 4, in which, when a satellite that has disappeared reappears in the theoretical constellation (2, 3, 4, 5, 6), the method includes the step of waiting for the filters (A, B, C, D, E) to converge prior to creating an additional filter (A, B, C, D, E) excluding said satellite and reincorporating said satellite in the existing additional filters.

## Patentansprüche

1. Verfahren zur Verwaltung zusätzlicher Filter (A, B, C, D, E) in einem Satellitennavigations- und -lokalisationssystem (10), mit dem ein Fahrzeug (1) ausgerüstet ist und das während einer Fahrt des Fahrzeugs mindestens eine Position des Fahrzeugs liefert, indem ein Hauptfilter (P) zur Verschmelzung von Daten verwendet wird, die aus einer sichtbaren Konstellation von Satelliten (2, 4, 5, 6) stammen, die zu einem Satellitenlokalisationssystem gehören und oberhalb des Horizonts des Fahrzeugs vorhanden sind, wobei die zusätzlichen Filter jeweils die Daten ausschließen, die von einem der Satelliten stammen, um eine korrigierte Position im Falle eines Versagens des ausgeschlossenen Satelliten zu erhalten, **dadurch gekennzeichnet, dass** das Verfahren die Schritte umfasst:
- Bestimmen, ausgehend von einer Position des Fahrzeugs, einer theoretischen Konstellation von Satelliten (2, 3, 4, 5, 6), die zu dem Satellitenlokalisationssystem gehören und oberhalb des Horizonts vorhanden sind,
- für jeden in der theoretischen Konstellation vorhandenen Satelliten Erzeugen und Aufrechterhalten eines zusätzlichen Filters, der diesen Satelliten ausschließt.

2. Verfahren nach Anspruch 1, umfassend für jeden in der theoretischen Konstellation vorhandenen Satelliten (2, 3, 4, 5, 6) den Schritt des Einschließens dieses Satelliten in die vorhandenen zusätzlichen Filter (A, B, C, D, E) ab dem Erscheinen dieses Satelliten in der theoretischen Konstellation.

3. Verfahren nach Anspruch 1, wobei die zur Bestimmung der theoretischen Konstellation (2, 3, 4, 5, 6) verwendete Position von dem Hauptfilter (P) geliefert wird.

4. Verfahren nach Anspruch 1, wobei, wenn ein Satellit aus der theoretischen Konstellation (2, 3, 4, 5, 6) zu einem Zeitpunkt der Fahrt verschwindet, das Verfahren den Schritt des Abwartens einer vorgegebenen Zeitdauer umfasst, ehe der zusätzliche Filter (A, B, C, D, E), der diesen Satelliten ausschließt, abgeschaltet wird.

5. Verfahren nach Anspruch 4, wobei, wenn ein aus der theoretischen Konstellation (2, 3, 4, 5, 6) verschwundener Satellit erneut erscheint, das Verfahren den Schritt des Abwartens einer Konvergenz der Filter (A, B, C, D, E) umfasst, ehe ein zusätzlicher Filter (A, B, C, D, E) erzeugt wird, der diesen Satelliten ausschließt, und dieser Satellit erneut in die vorhandenen zusätzlichen Filter aufgenommen wird.
